# EUROPÄISCHE PATENTANMELDUNG

(11) **EP 3 719 961 A1**
(43) Veröffentlichungstag der Anmeldung: **07.10.2020**
(21) Anmeldenummer: 19167296.3
(22) Anmeldetag: 04.04.2019
(51) Int. Cl.: H02K 1/32, H02K 5/18, H02K 5/20, H02K 9/06, H02K 9/14, H02K 11/33

(54) **ANTRIEBSEINHEIT MIT EINER WELLENKÜHLUNG**

(71) Anmelder: Siemens Aktiengesellschaft, 80333 München (DE)
(72) Erfinder: Deeg, Christian, 90518 Altdorf (DE); Kuhn, Harald, 90491 Nürnberg (DE); Maidorn, Mischa, 90547 Stein (DE); Mächtel, Stefan, 91334 Hemhofen-Zeckern (DE); Tischmacher, Hans, 91207 Lauf (DE)

(57) **Zusammenfassung**

Die Erfindung betrifft einen Antrieb (1) mit
- zumindest einer dynamoelektrischen rotatorischen Maschine (2), mit einem Stator (3) und einem mit einer Welle (9) drehfest verbundenen Rotor (6),
- zumindest einem elektronischen Anbauteil (13),
- zumindest einer Kühleinheit (15),
- wobei dynamoelektrische rotatorische Maschine (2), elektronisches Anbauteil (13) und Kühleinheit (15) axial hintereinander angeordnet sind, indem das elektronische Anbauteil (13) zwischen dynamoelektrischer rotatorischer Maschine (2) und der Kühleinheit (15) angeordnet ist,
- wobei die Kühleinheit (15) eine Kühlung von zumindest Stator (3) und Rotor (6) der dynamoelektrischen rotatorischen Maschine (2) bewirkt, indem die Welle (9) thermisch gut leitend mit dem Rotor (6) und der Kühleinheit (15) verbunden ist.

## Beschreibung

Die Erfindung betrifft eine Antriebseinheit mit einer dynamoelektrischen Maschine zumindest einem elektronischen Anbauteil und zumindest einer Kühleinheit.

Derartige Antriebseinheiten sind beispielsweise aus der DE 198 12 729 A1 bekannt. Diese Schrift beschreibt einen Elektromotor, insbesondere mit einem Lüfterrad zur Bildung eines Axial- oder Radiallüfters, mit einer Antriebseinheit und einer ein Steuerungsgehäuse aufweisenden Steuereinheit, wobei die Antriebseinheit einen Stator, ein Läufer und zumindest eine elektrische Spule aufweist und wobei die Steuereinheit eine elektronische Schaltung zur Steuerung oder Regelung der Stromzufuhr zur Spule aufweist. Die Antriebseinheit und die Steuereinheit sind durch Module gebildet und einander zugeordnete Kontaktelemente sind zur gegenseitigen elektrischen Verbindung vorgesehen.

Ebenso ist eine derartige Anordnung aus der DE 38 42 588 A1 bekannt. Diese Schrift beschreibt einen kollektorlosen Gleichstrom-Außenläufermotor, der aus einem an einem Motorflansch befestigten Stator mit Statorwicklungen, einem den Stator auf seiner dem Motorflansch abgekehrten Seite umschließenden Außenläufer sowie einer elektronischen, die Statorwicklungen ansteuernden Schaltungsanordnung besteht. Diese Schaltungsanordnung besitzt eine flanschseitig dem Stator zugekehrten angeordnete, elektronischen Bauelemente tragende Leiterplatte sowie mehrere an der Leiterplatte elektrisch angeschlossene, in wärmeleitendem Kontakt mit dem Motorflansch angeordnete Leistungshalbleiter. Die Leistungshalbleiter sind mittelbar über einen ringscheibenförmigen Kühlkörper mit dem Motorflansch wärmeleitend verbunden. Der Kühlkörper bildet mit der Leiterplatte und einem die Leiterplatte halternden Trägerelement eine vormontierte Baugruppe.

Ausgehend davon liegt der Erfindung die Aufgabe zugrunde, eine kompakte Antriebseinheit zu schaffen, die eine ausreichende Kühlung der Anbauteile gewährleistet.

Die Lösung der gestellten Aufgabe gelingt durch einen Antrieb mit
- zumindest einer dynamoelektrischen rotatorischen Maschine, mit einem Stator und einem mit einer Welle drehfest verbundenen Rotor,
- zumindest einem elektronischen Anbauteil,
- zumindest einer Kühleinheit,
- wobei dynamoelektrische rotatorische Maschine, elektronisches Anbauteil und Kühleinheit axial hintereinander angeordnet sind, indem das elektronische Anbauteil zwischen dynamoelektrischer rotatorischer Maschine und der Kühleinheit angeordnet ist,
- wobei die Kühleinheit eine Kühlung von zumindest Stator und Rotor der dynamoelektrischen rotatorischen Maschine bewirkt, indem die Welle thermisch gut leitend mit dem Rotor und der Kühleinheit verbunden ist.

Damit ergibt sich ein sehr kompakter und leistungsfähiger Antrieb, der mittels der Kühleinheit, insbesondere die Komponenten der dynamoelektrischen rotatorischen Maschine, wie Stator und Rotor über die Welle kühlt.

Dabei wird hauptsächlich der Rotor aufgrund des direkten Kontaktes seines Blechpaketes mit der Welle über die Welle gekühlt. Außerdem wird Wärme des Rotors auch an den Innenraum der dynamoelektrischen rotatorischen Maschine abgegeben, sodass sich die Lagerschilde, Lager und Gehäuse dadurch ebenfalls erwärmen können. Dieser Wärmeeintrag wird durch die das Gehäuse und die Lagerschilde umströmende Luft abgeführt.

Der Stator erzeugt ebenso Wärme, die u.a. den Innenraum der dynamoelektrischen rotatorischen Maschine aufheizt. Dieser Wärmeeintrag wird ebenfalls durch die das Gehäuse und die Lagerschilde umströmende Luft abgeführt. Des Weiteren ist der Stator vorzugsweise in einen Gehäusemantel eingeschrumpft, um einen vergleichsweise guten Wärmeübergang vom Blechpaket des Stators auf das Gehäuse und damit die, insbesondere radial abstehenden Gehäuserippen zu erhalten.

Es besteht somit ein gut wärmeleitender Kontakt von dem Rotor über die Welle zu der Kühleinheit, die insbesondere als Lüftereinheit mit einem oder mehreren Lüftern ausgeführt sein kann.

Die Welle ist somit als in sich geschlossener Thermosiphon oder als offene Wellenkühlung mittels Luft ausgeführt.

Bei der Ausführung als Thermosiphon wird insbesondere ein mit einem Sackloch versehener Wellenstumpf durch Additive Manufactoring (AM) derart axial erweitert, dass sich insbesondere eine Kondensatorzone im Bereich der Kühleinheit ergibt, die mit einer mikroskaligen Struktur versehen ist und so den Rückkühlprozess verbessert.

Bei einer Wellenkühlung mittels Luft, strömt diese axial in ein am Wellenspiegel offenes Sackloch der Welle. Dort wird sie umgelenkt und im Bereich der Kühleinheit erwärmt nach außen gefördert.

Die Erfindung sowie weitere vorteilhafte Ausgestaltungen der Erfindung werden anhand prinzipieller dargestellter Ausführungsbeispiele näher dargestellt; darin zeigen:
- FIG 1: einen prinzipiellen Längsschnitt eines erfindungsgemäßen Antriebs,
- FIG 2: Wärmeeintrag bei einem erfindungsgemäßen Antrieb,
- FIG 3: Wärmefluss bei einem erfindungsgemäßen Antrieb,
- FIG 4: Welle als offene Hohlwelle,
- FIG 5 bis 7: Detaildarstellungen der Hohlwelle,
- FIG 8, 9: Welle als geschlossene Hohlwelle.

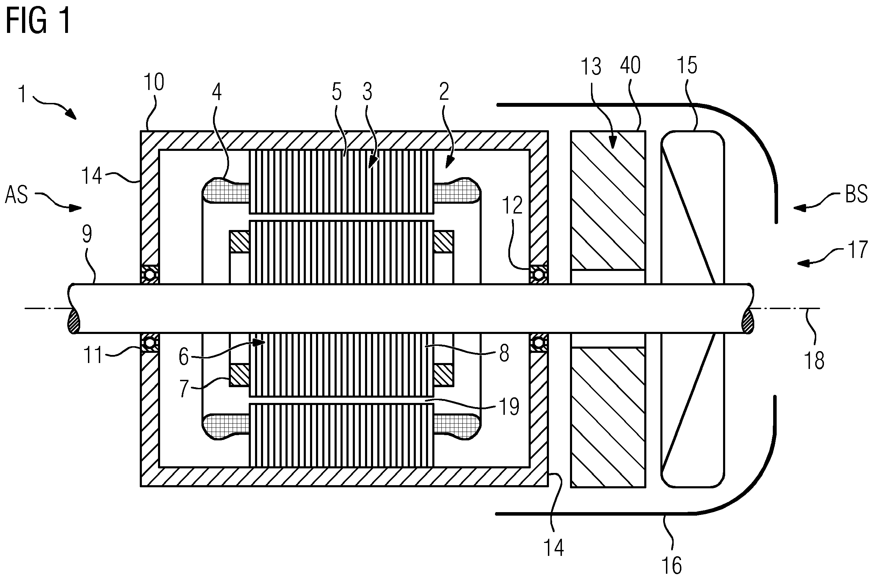

FIG 1 zeigt einen Antrieb 1 mit einer dynamoelektrischen rotatorischen Maschine 2, die einen Stator 3 aufweist, der ein Blechpaket 5 hat. In dem Blechpaket 5 des Stators 3 sind einem Luftspalt 19 zugewandt, in denen ein Wicklungssystem angeordnet ist, das an den Stirnseiten des Blechpakets 5 des Stators 3 Wickelköpfe 4 ausbildet. Drehfest mit einer Welle 9 ist ein Blechpaket 8 eines Rotors 6 verbunden, das in elektromagnetischer Wechselwirkung mit einem bestromten Wicklungssystem des Stators 3 steht und so zu einer Rotation der Welle um eine Achse 18 führt. Die Welle ist in zwei Lagern drehfest gehalten, einem AS-Lager 11 und einem BS-Lager 12. Die dynamoelektrische rotatorische Maschine 2 ist von einem Gehäuse 10 umgeben, das an den Stirnseiten von Lagerschilden 14 begrenzt ist. Axial von der BS-Seite beabstandet befindet sich ein elektronisches Anbauteil 13, das zumindest Komponenten eines Umrichters oder Stellers beinhaltet. Das elektronische Anbauteil 13 ist ortsfest und nicht mit der Welle drehfest verbunden. Axial daran schließt sich ein Lüfter 15 an, der wiederum drehfest mit einer Welle 9 verbunden ist und einen Kühlluftstrom generiert, der durch eine Lüfterhaube 16 geführt wird. Der Luftstrom wird über eine oder mehrere Ansaugöffnungen 17 dem Lüfter 15 zugeführt.

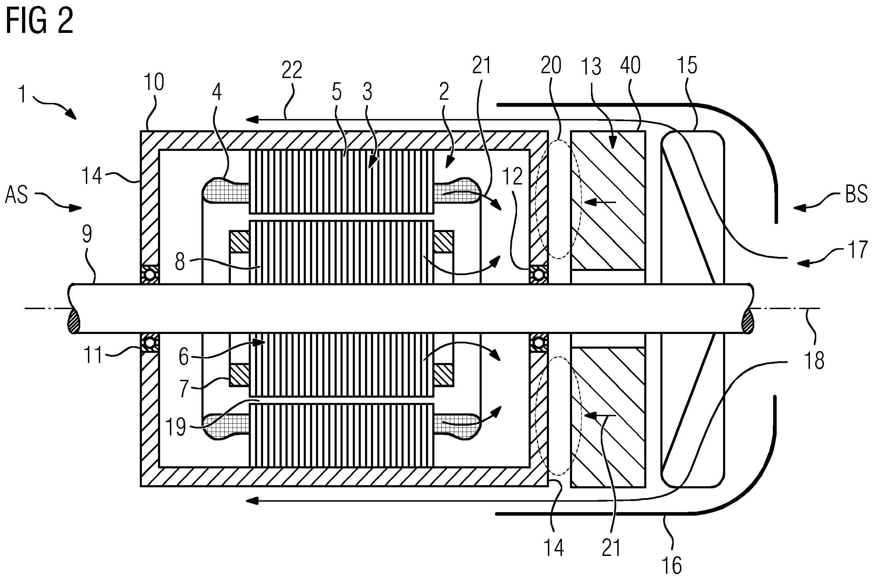

FIG 2 zeigt den Antrieb 1, der insbesondere zwischen dem elektronischen Anbauteil 13 und dem zugewandten Lagerschild 14 im Betrieb des Antriebs 1 einen Wärmestau 20 generiert. Der Wärmeeintrag 21 erfolgt dabei von beiden axialen Seiten. So führt Verlustwärme aus dem Umrichter oder Steller, als auch Wärme aus der Maschine 2 über das Lagerschild 14 zu dem Wärmestau 20. Die Wärme aus der Maschine 2 setzt sich u.a. aus der Verlustwärme von Stator 3 und Rotor 6 zusammen. Diese heizt zusätzlich das benachbarte Lager 12 auf, was den Schmiereigenschaften schadet.

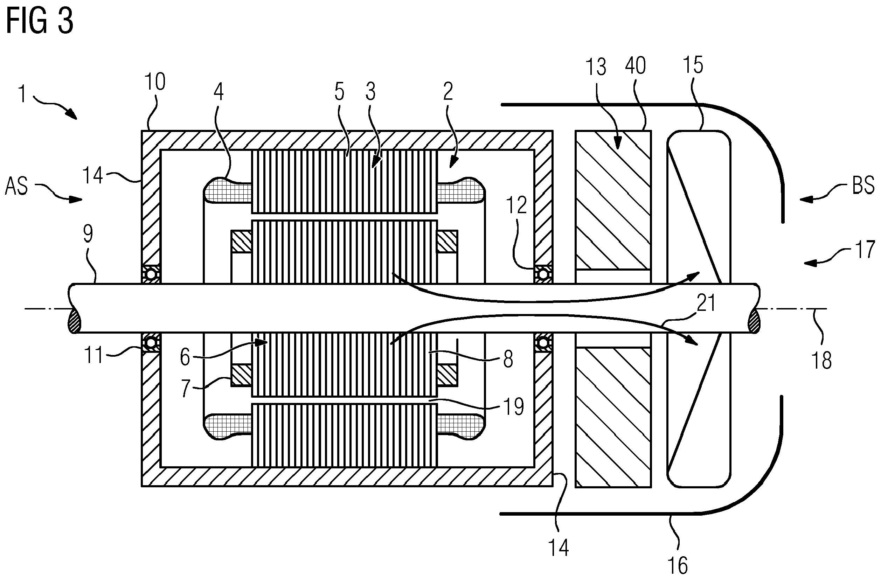

Nach FIG 3 wird die Wärme erfindungsgemäß mittels einer Welle 9, insbesondere aus dem Rotor 6 der dynamoelektrischen rotatorischen Maschine 2 transportiert und dem Lüfter 15 zugeführt, der als Wärmeabgabeelement fungiert, das zusätzlich im Betrieb der dynamoelektrischen rotatorischen Maschine 2 eine Kühlluftstrom 22 erzeugt.

In der Welle 9 ist ein Material enthalten, das ein besonders thermisch gut leitfähigen Beitrag leistet. Ebenso ist der Wärmeübergang zum Lüfter 15 mittels geeigneter Materialen ebenso thermisch günstig ausgelegt.

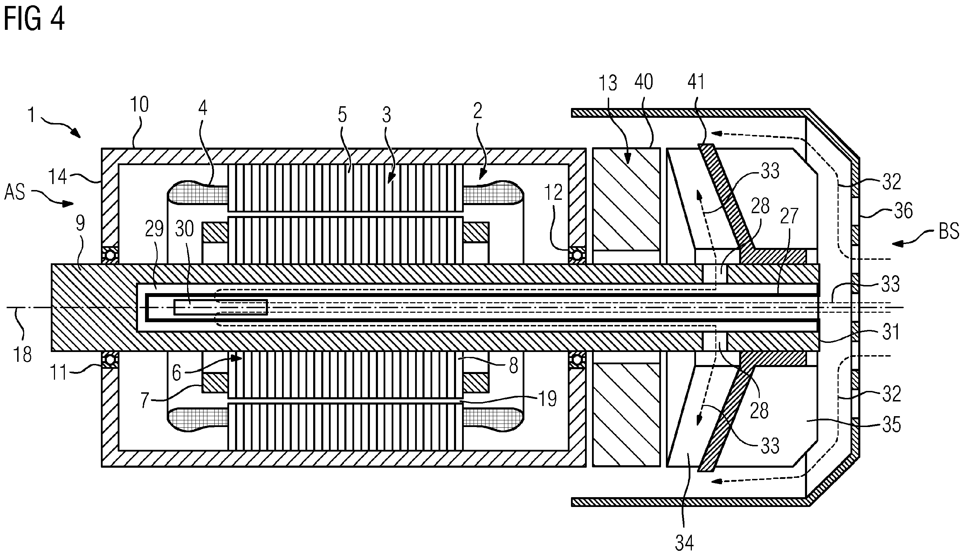

In einer Ausführung gemäß FIG 4 ist die Welle 9 als Hohlwelle bzw. Welle mit einem Sackloch 29 ausgeführt, wobei der Lüfter 15 u.a. die später noch genauer beschriebene Luftführung gewährleistet.

Die Hohlwelle ist zur BS-Seite hin offen. An dieser Belüftungsseite BS, axial außerhalb des Lagerschilds 14 und des elektronischen Anbauteils 13 befinden sich hier ebenfalls die radialen Durchbrüche 28 in der Welle 9.

Der innere Kühlmittelstrom 33 fließt hier axial in das Sackloch 29 der Hohlwelle ein. Das Sackloch 29 reicht von der Belüftungsseite BS her zumindest vollständig durch den Rotor 6. Damit der innere Kühlmittelstrom 33 auch vollständig durch den Rotor 6 hindurchfließt, ist in das Sackloch 29 ein Führungselement 37 eingeschoben.

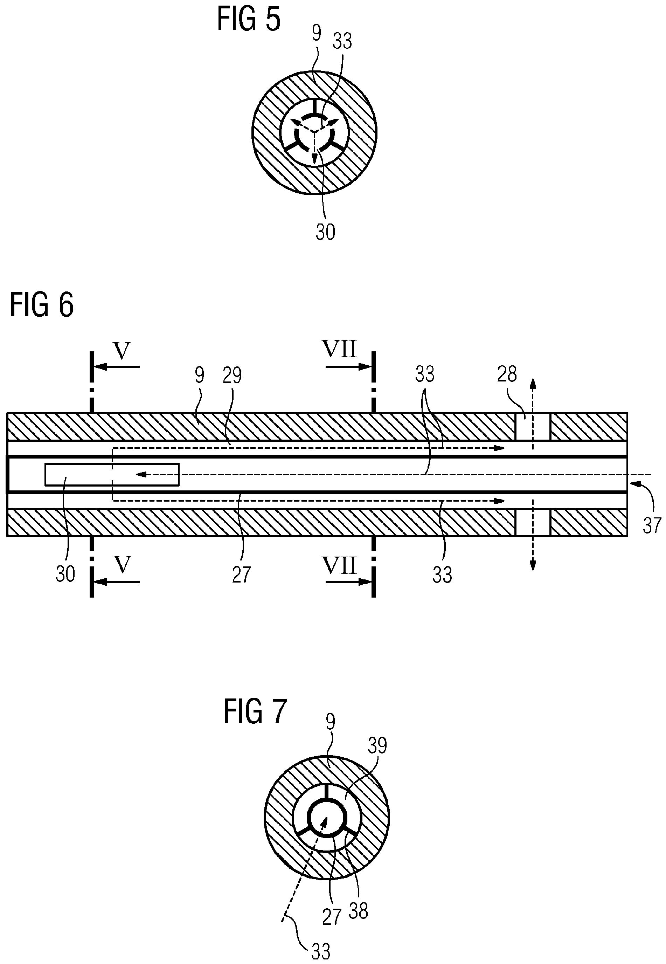

In FIG 6 ist das Sackloch 29 der Welle 9 im Längsschnitt, in FIG 5 ist der Schnitt III-III und in FIG 7 der Schnitt V-V dargestellt. Demnach besitzt das Führungselement 37 ein Röhrchen bzw. eine Röhre 27, die sich entlang der gesamten Tiefe des Sacklochs 29 erstreckt. Die Röhre 27 ist durch Stege 38 an der Innenwand des Sacklochs 29 abgestützt. In dem vorliegenden Beispiel sind es drei Stege 38, so dass sich entsprechende drei äußere Kanäle 39 zwischen der Außenwand der Röhre 27 und der Innenwand der Hohlwelle ergeben. Entsprechend der Anzahl der Stege 38 des Führungselements 37 können sich auch weniger oder mehr als drei Führungskanäle ergeben.

Etwa im axialen Bereich der Stirnseite des Rotors 6 auf der Antriebsseite AS befinden sich in der Röhre 27 Aussparungen 30. Durch diese Aussparungen 30 kann das Kühlmittel aus der Röhre 27 radial nach außen in die äußeren Kanäle 39 einströmen.

Aufgrund des Führungselements 37 ergibt sich also folgender innerer Kühlmittelstrom: Von der Belüftungsseite BS fließt der Kühlmittelstrom 33 axial in die Röhre 27 der Hohlwelle. Er durchströmt axial den Bereich des Rotors 6 in Richtung Antriebsseite AS und verlässt die Röhre 27 auf der Antriebsseite AS durch die Aussparungen 30 radial nach außen in die äußeren Kanäle 39. In den äußeren Kanälen 39 fließt der Kühlmittelstrom 33 axial zurück durch den Rotor 6 in Richtung Belüftungsseite BS. Insbesondere in den äußeren Kanälen 39 wird dabei die Verlustwärme der Maschine 2 aufgenommen. Auf der Belüftungsseite BS verlässt er die Hohlwelle radial nach außen durch die Durchbrüche 28 in der Welle 9. Die radialen Durchbrüche 28 sind beispielsweise mehrere am Umfang verteilte Bohrungen in radialer Richtung durch die Wand der Hohlwelle.

An der Belüftungsseite BS der elektrischen Maschine 2 ist auf der Hohlwelle ein Lüfter 15, insbesondere ein Radiallüfter drehfest befestigt. Der Radiallüfter ist durch eine Lüfterhaube 16 umgeben, die an dem Gehäuse 10 befestigt ist. Die Lüfterhaube 16 besitzt an ihrer von der Maschine 2 abweisenden Seite Öffnungen 36, durch die Kühlmittel, insbesondere Luft, eindringen kann. Durch den Radiallüfter wird das Kühlmittel radial nach außen gelenkt, so dass ein äußerer Kühlmittelstrom 32 entsteht, der an der Lüfterhaube 16 in axiale Richtung zu dem Mantel des Gehäuses 10, der gegebenenfalls Kühlrippen enthält, umgeleitet wird.

Der Radiallüfter besitzt einen im Wesentlichen radial gerichteten Teller 41. Im vorliegenden Beispiel ist der Teller 41 kegelstumpfmantelförmig ausgebildet und besitzt in seiner Mitte einen rohrförmigen Abschnitt zum Aufstecken auf die Hohlwelle. An der der Maschine 2 zugewandten Seite des Tellers 41 befinden sich innere Lüfterflügel 34. Auf der gegenüberliegenden Seite des Tellers 41, d.h. der von der Maschine 2 abgewandten Seite bzw. der der Lüfterhaube 16 zugewandten Seite des Tellers 41, befinden sich äußere Lüfterflügel 35. Sowohl die inneren Lüfterflügel 34 als auch die äußeren Lüfterflügel 35 stehen radial ab.

Die inneren Lüfterflügel 34 fördern den inneren Kühlmittelstrom 33 radial nach außen. Die äußeren Lüfterflügel 35 fördern den äußeren Kühlmittelstrom 32 radial nach außen. Die beiden Kühlmittelströme 33, 32 vereinigen sich vor dem Eintritt in oder an das Gehäuse 10. Der innere Kühlmittelstrom 33 wird zusätzlich durch das Injektionsprinzip (Venturi-Injektion) radial nach außen gezogen, denn der äußere Kühlmittelstrom 32 reißt beim Vorbeifließen an der Spitze der inneren Lüfterflügel 34 den inneren Kühlmittelstrom 33 mit.

Um eine möglichst effiziente Lüfterwirkung zu erzielen, sind die inneren Lüfterflügel 34 in ihrer Kontur an die belüftungsseitige Gehäuseanordnung 40 angepasst. Im vorliegenden Beispiel verläuft der Rand eines inneren Lüfterflügels 34 parallel zu der Gehäuseanordnung 40. Der Abstand zwischen beiden Teilen sollte möglichst gering sein. Darüber hinaus verläuft der Teller 41 ebenfalls parallel zu der Gehäuseanordnung 40. Dadurch kommt es nicht zu einer Querschnittsverjüngung für den inneren Kühlmittelstrom 33, so dass dieser ungehindert fließen kann.

Das erfindungsgemäße Belüftungs- bzw. Kühlkonzept führt zu einer direkten Rotorkühlung über die Welle 9. Die daraus resultierende verbesserte Kühlung führt zu einer Lebensdauer- bzw. Wirkungsgradsteigerung der elektrischen Maschine 2. Die Schutzart der elektrischen Maschine 2 bleibt unbeeinflusst, da das Gehäuse 10 bzw. der Maschineninnenraum nicht geöffnet wird. Folglich kann das Kühlkonzept auch bei explosionsgeschützten Maschinen angewendet werden.

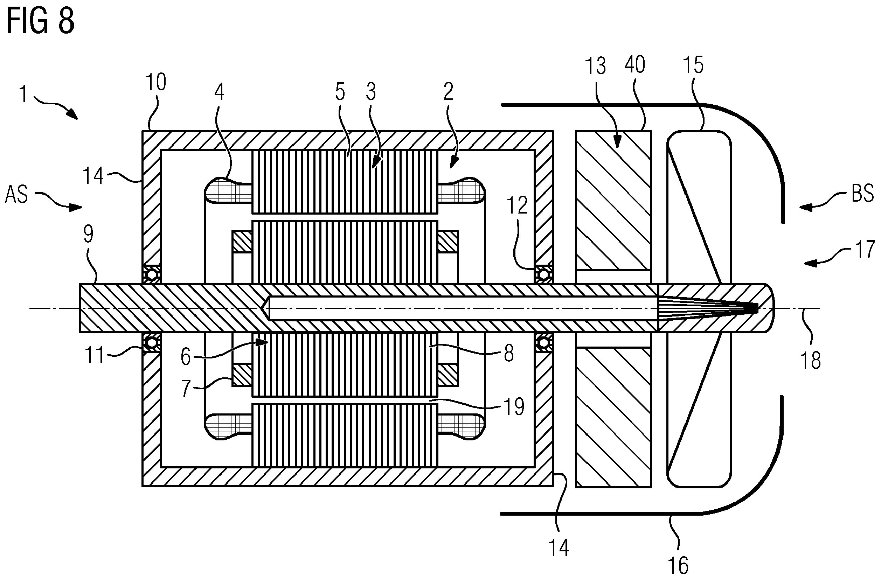

In einer anderen Ausführung gemäß FIG 8 ist die Welle 9 als Thermosiphon ausgeführt, wobei der Lüfter 15 als Kondensor fungiert. Auch dabei ist der Wärmeübergang von der Welle 9 zum Lüfter 15 mittels geeigneter Materialen und/oder Formgebungen mit einem vergleichsweise geringen Wärmeübergang ausgeführt.

FIG 8 zeigt eine rotatorische dynamoelektrische Maschine 2, die einen Stator 3 und einen Rotor 6 aufweist. Der Rotor 6 ist in dieser Ausführungsform als Käfigläufer ausgeführt, kann jedoch grundsätzlich auch ein permanenterregter Rotor 6, ein Rotor 6 einer Reluktanzmaschine oder ein Rotor 6 mit einem Wicklungssystem sein.

Der Rotor 6 ist drehfest mit einer Hohlwelle verbunden, wobei die Hohlwelle in Lagern 11, 12 gelagert ist. Unter einer drehfesten Verbindung ist dabei eine drehmomentenübertragende Verbindung, wie z.B. eine Schrumpfverbindung oder eine Passfeder-Verbindung oder eine andere Welle-Nabe-Verbindungen zwischen Blechpaket des Rotors 6 und der Hohlwelle zu verstehen. Ein Gehäuse 10 der elektrischen Maschine 2 trägt die Lagerschilde 14. Am Gehäuse 10 radial außerhalb des Stators, befinden sich axial verlaufende Kühlrippen, die einen von einem Lüfter 15 erzeugten Kühlluftstrom entlang des Gehäuses 10 führen. Der Lüfter 15 ist dabei in einer Lüfterhaube 15 untergebracht, die optional Öffnungen bzw. Ansaugöffnungen 17 aufweist.

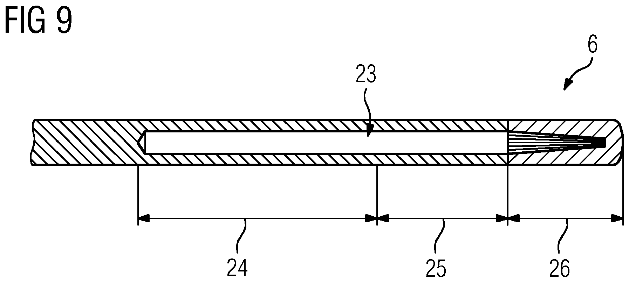

Die Hohlwelle ist in dieser Ausführung durch eine zentrale axiale Ausnehmung, z.B. eine Bohrung hohl ausgeführt und weist gemäß FIG 9 eine Verdampferzone 24 im Bereich des Rotors 6 auf, optional eine Transportzone 25, und eine Kondensatorzone 26. Die axiale Erstreckung der Verdampferzone 24 der Hohlwelle entspricht zumindest der axialen Erstreckung des Blechpakets des Rotors 6.

In dieser Ausführung weist die Hohlwelle eine zentrale Bohrung auf, es ist aber auch denkbar, dass mehrere achsparallele Bohrungen vorhanden sind, die in die dann dementsprechend ausgestaltete Kondensatorzone münden.

In der Kondensatorzone 26 findet die Rückkühlung des Kühlmediums, z.B. einer Verdampferflüssigkeit statt. Dabei ist entscheidend, dass in einem vergleichsweise axial kurzem Bereich - also der Kondensatorzone 26 - eine effiziente Rückkühlung der Verdampferflüssigkeit eintritt, um somit eine ausreichende Kühleffizienz der gesamten dynamoelektrischen Maschine 2 und damit des Antriebs 1 zu gewährleisten. Der vergleichsweise axial kurze Abschnitt der Kondensatorzone 26 gewährleistet außerdem einen kompakten Aufbau des Antriebs 1.

Eine derartige Kondensatorzone 26 kann durch additive Fertigungsverfahren sehr mikroskalig ausgeführt sein. Die einzelnen Stegbreiten, Rippenhöhen, Stegdurchmesser, Abstände der Stege/Rippen befinden sich im Millimeterbereich und/oder darunter. Somit ist eine ausreichende Fläche geschaffen, die einen effizienten Rückkühlungseffekt des Kühlmediums gewährleistet.

Als additives Fertigungsverfahren zur Bearbeitung von Metallen zur Herstellung der Kondensatorzone eignen sich vor allem das selektive Lasersintern und das selektive Laserschmelzen mit speziell für diese Herstellung geeignetem Energieeintrag von ca. highest nominal laser power (NLP) von 1,6 bis 2,5 Ws/mm². Damit wird eine ausreichende Dichtheit und mechanische Stabilität zwischen Hohlwellensegment und Kondensatorzone geschaffen. Oberhalb dieses Energieeintrages muss mit lokalen unerwünschten Effekten aufgrund Überhitzung gerechnet werden. Unterhalb dieses Energieeintrages tritt zunehmende Porenbildung, die ggf. die Gasdichtheit und/oder die mechanische Festigkeit beeinträchtigt.

Außerdem ist durch geeignete additive Fertigungsverfahren der Aufbau der Kondensatorzone mit mehreren Materialen, insbesondere zwei Materialien umsetzbar.

Die Kondensatorzone 26, also der axiale Abschnitt, der sich an ein Hohlwellensegment anschließt, ist nunmehr folgendermaßen aufgebaut:
Es gibt einen Rückkühlbereich, der die mikroskalige Struktur, aufweist, wobei diese Struktur thermisch leitend mit der Wandung der Kondensatorzone 26 verbunden ist. Radial außerhalb der Wandung sind Wärmeleitelemente, wie radiale Noppen oder Zapfen vorgesehen, die mit dem Lüfter 15 in wärmeleitendem Kontakt stehen.

Des Weiteren können die fein-mikroskalige Strukturen, die teilweise im Inneren mit einem im Wesentlichen konischen Verlauf Richtung Verdampferzone 24 ausgeführt sein, um einen dementsprechenden Rücktransport des Kühlmediums in die Verdampferzone der Hohlwelle 6 zu erhalten.

Die mikroskalige Struktur weist dabei grundsätzlich Rippen und/oder Prismen und/oder Hohlkörper und/oder andere oberflächenvergrößernde Strukturen auf.

FIG 9 zeigt die axial verlaufenden Abschnitte der Hohlwelle, wobei insbesondere an einem axialen Ende die Kondensatorzone 26 angedruckt ist. Die als Thermosiphon ausgebildete Hohlwelle weist in axialer Richtung einen Verdampferzone 24, optional eine Transportzone 25 und die Kondensatorzone 26 auf. Das Hohlwellensegment weist in dieser Ausführung die Verdampferzone 24 und eine Transportzone 25 auf. In der Verdampferzone 24 wird ein Kühlmedium unter Aufnahme von Wärme insbesondere des Rotors 6 verdampft und in der Kondensatorzone 26 rückgekühlt.

Insbesondere in der Transportzone 25 können geeignete Füllkörper in der Hohlwelle den Transport des verdampften und/oder rückgekühlten Kühlmediums verbessern. Des Weiteren eignet sich die Transportzone 25 auch für die axiale Durchführung im Bereich des elektronischen Anbauteils 13.

Dies ist dann vor allem von Vorteil, wenn die Hohlwelle in unterschiedlichsten räumlichen Anordnungen eingesetzt ist, beispielsweise bei Hohlwellen in Fahrzeugen, die im schwergängigen Gelände unterwegs sind.

Die Kondensatorzone 26 weist einen nicht näher dargestellten axial verlaufenden Stutzen auf, über den beispielsweise das Kühlmittel zugeführt und/oder der Betriebsdruck des Thermosiphons eingestellt werden kann. Der Stutzen ist im Betrieb der dynamoelektrischen Maschine 2 verschlossen, um den Kühlkreislauf aufrechterhalten zu können.

Der Antrieb 1 bzw. die Antriebseinheit ist grundsätzlich kompakt aufgebaut. Dabei können die vorab beschriebenen und die folgenden Merkmale einzeln oder in beliebiger Kombination zur Gestaltung des Antriebs 1 angezogen und zusammengestellt werden. Dabei soll der kompakte Antrieb 1 u.a. bestmöglich gekühlt werden.

Dazu wird an die dynamoelektrische rotatorische Maschine 2 axial zumindest ein elektronisches Anbauteil 13 oder Komponenten davon, wie ein oder mehrere Leistungshalbleiter, Drosseln, Kondensatoren und Regelungsbausteine, vorgesehen. Diese Komponenten des elektronischen Anbauteils 13 sind in einer geschlossenen Gehäuseanordnung angeordnet. Eine Kühlung des Antriebs 1 und seiner jeweiligen Abschnitte/Teile erfolgt durch eine oder mehrere Kühleinheiten, die als Flüssigkeitskühlung (Kühlmantel an Gehäuseanordnung und/oder am Gehäuse der dynamoelektrische rotatorische Maschine 2) realisiert werden kann. Vorzugsweise wird eine Luftkühlung vorgesehen, deren Lüfter 15 an der der dynamoelektrischen rotatorischen Maschine 2 abgewandten Seite der Gehäuseanordnung liegt, so dass eine axiale Reihenfolge von Lüfter 15, Gehäuseanordnung 40 und dynamoelektrischer rotatorischer Maschine 2 vorliegt.

Der Lüfter 15 kann auch als eine Lüftereinheit aus einem oder mehreren Eigen- oder auch Fremdlüftern aufgebaut sein, die auch zumindest teilweise an oder in einer Lüfterhaube integriert sein können.

Zur Verbesserung des Kühleffekts sind oberflächenvergrößernde Maßnahmen an der Gehäuseanordnung 40 und/oder dem Gehäuse 10 der dynamoelektrischen rotatorischen Maschine 2 vorgesehen. Dabei sind dort Rippen, Noppen oder zusätzliche Wärmekapazitäten in Form von Gehäuseerweiterung vorgesehen, die Wärmelasten bei dementsprechendem Betrieb des Antriebs 1 puffern können.

Außerdem wird durch spezielle Gestaltung bzw. Aussparungen zwischen dynamoelektrischer rotatorischer Maschine 2, insbesondere deren Lagerschild 14 und der Gehäuseanordnung 40 Kühlkanäle geschaffen, die durch dementsprechende Gestaltung und einem Hauptluftstrom einen zur Kühlung betragenden Venturieffekt in den Aussparungen erzielen.

Die Gehäuseanordnung kann dabei auch trichterförmig ausgebildet, wobei der Trichter einen zylindrischen Abschnitt und einen axial verjüngenden Abschnitt aufweist, die einstückig aus gleichem Material, aus mehreren Teilen mit unterschiedlichen Materialien und aus mehreren Teilen mit gleichem Material ausgeführt sein kann.

Um die Oberfläche der Gehäuseanordnung 40 zu vergrößern weist der zylindrische Abschnitt und/oder der sich axial verjüngenden Abschnitt an seiner Außenseite axial bzw. quasi-radial erstreckende Rippen auf.

Die Innenseite des zylindrischen Abschnitts und/oder des sich axial verjüngenden Abschnitt ist polygonal ausgeführt, um Steller- oder Umrichterkomponenten direkt an der Innenseite der Gehäuseanordnung 40 anordnen zu können. Damit wird eine vergleichsweise thermisch gute Anbindung gewährleistet.

Die Steller- oder Umrichterkomponenten können insbesondere auch ausschließlich im zylindrischen Abschnitt angeordnet sein, in diesem Fall wirkt der sich axial verjüngenden Abschnitt 26 als Wärmekapazität, der eine thermisch puffernde Wirkung aufweist. Dieser Abschnitt 26 ist dann als Vollmaterial ausgeführt, der gleichzeitig für den Lüfter 15 die Funktion einer Deckscheibe oder Teller 41 erfüllt. Damit können axial kürzere Lüfter 15 eingesetzt werden, um so eine kompaktere Bauweise des Antriebs 1 zu erhalten.

Ebenso ist es möglich im elektronischen Anbauteil 13 eine oder mehrere Innenlüfter vorzusehen, die innerhalb des geschlossenen elektronischen Anbauteils 13 zu einem Innenkühlkreislauf führen. Der Innenlüfter ist dabei entweder separat als Fremdlüfter temperaturabhängig ansteuerbar, oder magnetisch mit der Welle 9 gekoppelt, so dass eine Art Eigenbelüftung des elektronischen Anbauteils 13 vorliegt, sobald sich die Welle 9 dreht.

Der Antrieb des Innenlüfters erfolgt über eine magnetische Kopplung von auf der Welle 9 positionierten Magneten und dementsprechend angeordneten Magneten innerhalb des elektronischen Anbauteils 13 beispielsweise auf einer Nabe des Innenlüfters.

Alternativ kann der Innenlüfter seine Antriebsenergie auch dem Drehfeld der dynamoelektrischen rotatorischen Maschine 2, insbesondere dessen Oberschwingungen entnehmen.

Die elektrische Antriebsenergie des Innenlüfter kann auch direkt den Steller- oder Umrichterkomponenten innerhalb des elektronischen Anbauteils 13 entnommen werden.

Die Innenlüfter sind dabei bei jeder Ausführungsform innerhalb des stationären Anbauteils 13 drehbar gelagert.

Die Isttemperatur wird dabei jeweils über ein Temperaturmodell und/oder einen oder mehrere Temperatursensoren in der dynamoelektrischen rotatorischen Maschine 2 und/oder dem elektronischen Anbauteil 13 ermittelt.

Durch den Lüfter 15 und den Innenlüfter kann auch zumindest zeitweise auch ein Redundanzbetrieb des Antriebs 1 aufrechterhalten werden, sofern einer der beiden Lüfter ausfallen sollte.

Zur Regelung kann der Antrieb 1 auch eine Regeleinheit aufweisen, die Daten unterschiedlichster Sensoren u.a. Temperatursensoren, Schwingungssensoren, Schallsensoren erhält. Die Temperatursensoren sind bei diesem Antrieb 1 an den relevanten Einbauorten angeordnet. So sind Temperatursensoren für die Außenluft, für das elektronische Anbauteil 13, der Leistungshalbleiter im elektronischen Anbauteil 13, für das oder die Lager 11, 12, für das Wicklungssystem und/oder den Wickelkopf 4, für den Innenraum der Maschine 2, als auch für das Gehäuse 10 und die Umgebung vorgesehen.

Sensoren, die in dem Antrieb 1, also der Maschine 2 und/oder dem elektronischen. Anbauteil 13 vorgesehen werden, sind kabelgebunden oder kabellos mit einer Regeleinheit verbunden, die in der elektronischen Anbaueinheit 13 oder am Gehäuse 10 der Maschine 2, insbesondere in einem Klemmenkasten oder in der Maschine 2 angeordnet ist.

Schwingungssensoren sind an der Welle 9 und oder Gehäuse 10 angebracht. Schallsensoren sind vor allem an schallemittierenden Quellen, wie z.B. Rippen oder Lagerschilden 14 vorgesehen. Des Weiteren sind Drehzahlsensoren zur Regelung des Antriebs 1 vorhanden.

Aus all diesen Daten regelt bzw. steuert die Regeleinheit u.a. die Drehzahl des oder der Fremdlüfters und/oder die Taktfrequenz des Umrichters. D.h. bei besonders hohen Außentemperaturen und/oder geringer Drehzahl der Welle 9 wird der Fremdlüfter temperaturabhängig zugeschaltet. Dabei ist auch die Drehzahl und damit der Volumenstrom des Fremdlüfters 26 steuer- bzw. regelbar.

Die Isttemperatur vorzugsweise des gesamtem Antriebs 1 wird dabei über einen oder mehrere der oben aufgeführten Temperatursensoren erfasst. Zusätzlich ist es möglich über ein Temperaturmodell die erfassten Werte zu verifizieren bzw. über vorgegebene in der Regeleinheit und/oder einer Cloud (beispielsweise über einen digitalen Zwilling) hinterlegte Algorithmen Temperaturen der Antriebskomponenten zu ermitteln, die nicht mit Sensoren versehen sind.

Damit ist ein energieeffizienter Betrieb des Antriebs 1 durchzuführbar und Wartungsintervalle des Antriebs 1 und dessen Komponenten sind außerdem besser planbar, wie z.B. Nachschmierfristen der Lager.

Die Sensoren sind dabei Schwingungssensoren, Temperatursensoren, Feuchtigkeitssensoren etc. Vorteilhafterweise übermitteln die Sensoren, ihre Daten leitungsgebunden oder über drahtlose Verbindungen an die Regeleinheit. Die Daten werden entweder durch direkten Kontakt oder optisch (beispielsweise Infrarot-Temperaturmessung) erfasst.

Die Regeleinheiten unterschiedlicher Antriebe 1 können auch über eine Cloud in Kontakt stehen und dabei vorgebbare Daten ihrer Antriebe austauschen.

Damit ergibt sich ein sehr kompakter und leistungsfähiger Antrieb 1, der aufgrund der Regeleinheit einen thermisch und/oder energieeffizienten Betrieb des Antriebs 1 gewährleistet. Dabei greift die Regeleinheit in die Taktfrequenz, den Aussteuergrad und/oder den Steuerwinkel eines Umrichters des elektronischen Anbauteils ein, ebenso wie beispielsweise in die Drehzahl eines Fremdlüfters. Damit ergibt sich im Hinblick auf thermische grenzen und/oder Energieeffizienz des Antriebs 1 eine optimale und aussteuerbare Verlustaufteilung zwischen den Komponenten der dynamoelektrischen Maschine 2 und den elektronischen Anbauteilen 13. Mittels der Kühleinheiten, zumindest einer Basiskühleinheit, einer Eigenbelüftung 15 und/oder einer Boosterkühleinheit, die insbesondere die Komponenten der dynamoelektrischen rotatorischen Maschine 2, wie Stator und Rotor, als auch die elektronischen Anbauteile 13, wie Leistungs- und Steuerelektronik, Regeleinheit etc. kühlt, wird somit auch ein thermisch steuer- bzw. regelbarer optimaler Betrieb des Antriebs 1 gewährleistet.

Beispielsweise führen bestimmte Einstellungen der Taktfrequenz des Umrichters zu geringeren Verlusten im Umrichter, aber erhöhen die Verluste in der dynamoelektrischen Maschine 2. Umgekehrt können thermisch günstige Einstellungen für die dynamoelektrische Maschine 2 den Umrichter thermisch stärker belasten. Je nachdem welches dieser Teilsysteme des Antriebs 1 noch thermische Reserven aufweist, kann über die Regeleinheit 27 der Umrichter dementsprechend eingestellt werden. Zusätzlich kann die Regeleinheit 27 auch in die Kühlung eingreifen, indem beispielsweise ein oder mehrere Fremdlüfter des Antriebs 1 zu- oder abgeschaltet werden oder mit dementsprechender Drehzahl betrieben werden.

## Patentansprüche

1. Antrieb (1) mit
- zumindest einer dynamoelektrischen rotatorischen Maschine (2), mit einem Stator (3) und einem mit einer Welle (9) drehfest verbundenen Rotor (6),
- zumindest einem elektronischen Anbauteil (13),
- zumindest einer Kühleinheit (15),
- wobei dynamoelektrische rotatorische Maschine (2), elektronisches Anbauteil (13) und Kühleinheit (15) axial hintereinander angeordnet sind, indem das elektronische Anbauteil (13) zwischen dynamoelektrischer rotatorischer Maschine (2) und der Kühleinheit (15) angeordnet ist,
- wobei die Kühleinheit (15) eine Kühlung von zumindest Stator (3) und Rotor (6) der dynamoelektrischen rotatorischen Maschine (2) bewirkt, indem die Welle (9) thermisch gut leitend mit dem Rotor (6) und der Kühleinheit (15) verbunden ist.

2. Antrieb (1) nach Anspruch 1, **dadurch gekenn-zeichnet**, dass die Welle (9) einen mit der Kühleinheit thermisch gekoppelten Thermosiphon aufweist, mit einer zumindest abschnittsweise mikroskaligen Struktur.

3. Antrieb (1) nach Anspruch 2, **dadurch gekennzeichnet, dass** die mikroskalige Struktur im Bereich der Kühleinheit (15) ausgebildet ist.

4. Antrieb (1) nach Anspruch 1, **dadurch gekennzeichnet, dass** die Welle (9) einen Wellenkühlung, insbesondere mittels eines Luftstromes aufweist.

5. Antrieb (1) nach einem der vorhergehenden Ansprüche, **dadurch gekennzeichnet, dass** die dynamoelektrische rotatorische Maschine (2) in einem Gehäuse (10) angeordnet ist, insbesondere eingeschlossen ist, wobei das Gehäuse (10) Rippen aufweist, an denen ein von der Kühleinheit (15) erzeugter Kühlluftstrom (22) zumindest abschnittsweise entlang geführt ist.

6. Antrieb (1) nach Anspruch 5, **dadurch gekennzeichnet, dass** eine Lüfterhaube (16) als Leitvorrichtung des Kühlluftstroms (22) dient, die sich insbesondere bis ca. 30% über die axiale Länge des Gehäuses (10) der dynamoelektrischen rotatorischen Maschine (2) ausgehend von der BS-Seite erstreckt.

7. Antrieb (1) nach einem der vorhergehenden Ansprüche, **dadurch gekennzeichnet, dass** das elektronische Anbauteil (13) Komponenten aufweist, die in einer Gehäuseanordnung (40) eingeschlossen sind und die als Steller und/oder Umrichter ausgeführt sind,

8. Antrieb (1) nach Anspruch 7, **dadurch gekennzeichnet, dass** eine Drossel des Stellers und/oder Umrichters am und/oder um das Gehäuse (10) der dynamoelektrischen rotatorischen Maschine (2) angeordnet ist.

9. Antrieb (1) nach einem der vorhergehenden Ansprüche, **dadurch gekennzeichnet, dass** Anschluss- und/oder Sensorleitungen über bzw. durch einen Lagerflansch (14) geführt sind, der der elektronischen Anbaueinheit (13) zugewandt ist oder über einen Klemmenkasten am Umfang des Gehäuses (10) geführt sind.

10. Antrieb (1) nach Anspruch 9, **dadurch gekennzeichnet, dass** durch dementsprechende Abdichtung beispielsweise von Leitungszuführungen und/oder dem Austritt der Welle (9) an den Lagerschilden (14) eine Schutzart für Staub- und Spritzwasser geschaffen ist.
